# EUROPEAN PATENT APPLICATION

(11) **EP 0 606 080 A1**
(43) Date of publication of application: **13.07.1994**
(21) Application number: 94100118.2
(22) Date of filing: 05.01.1994
(51) Int. Cl.: A23L 1/10

(54) **Process for preparing a high soluble fiber barley fraction**

(30) Priority: 06.01.1993 US 1003
(71) Applicant: THE QUAKER OATS COMPANY, Barrington Illinois 60010 (US)
(72) Inventor: Hibbs, Alice H., Crystal Lake, Illinois 60014 (US); Young, Lee R., Crystal Lake, Illinois 60014 (US)
(74) Representative: Baillie, Iain Cameron

(57) **Abstract**

The present invention relates to a process for preparing a high soluble fiber barley fraction having increased levels of beta-glucan and total dietary fiber, as compared to unprocessed barley, said process comprising: (a) treating barley in a manner sufficient to deactivate substantially all the beta-glucanase contained in the barley; (b) size reducing the barley to a coarse fraction and a fine fraction, wherein the beta-glucan content in said coarse fraction is greater than the beta-glucan content of the starting barley; and (c) separating the coarse fraction from the fine fraction. The present invention further comprises the product of the above process.

## Description

The present invention relates to a process for producing a high soluble fiber barley fraction having increased levels of beta-glucan and total dietary fiber, as compared to unprocessed barley. The present invention also relates to the product of this process.

Beta-glucan has been found to provide considerable health benefits. For example, studies have linked beta-glucan with a lowering of cholesterol. (See "The Hypocholesterolemic Effects of Beta-Glucan in Oatmeal and Oat Bran: A Dose-Controlled Study", M. Davidson, L. Dugan, J. Burns, J. Bova, K. Story and K. Drennan, J. Amer. Med. Assn., vol. 265; p. 1833 (April, 1991); and "Barley and Wheat Foods: Influence on Plasma Cholesterol Concentrations in Hypercholesterolemic Men", G. McIntosh, J. Whyte, R. McArthur, and P. Nestel, Amer. J. of Clinical Nutrition, 53 (5) 1205-1209 (1991).) In addition, total dietary fiber has been linked to reduced levels of cancers such as colon cancer, etc. (See "Risks Associated With Source of Fiber and Fiber Components in Cancer of the Colon and Rectum", J. Fruedenheim, S. Graham, P. Horvath and J. Marshall, Cancer Research, Vol. 50, pp. 3295-3300 (1990); and "Diet, Body Mass and Colorectal Cancer: A Case-Referent Study in Stockholm", M. De Verdier, U. Hagman, G. Steineck, A. Ringer and S. Norell, Int'l J. of Cancer, Vol. 46, pp. 832-838 (1990)).

Given these beneficial effects of beta-glucan and total dietary fiber, it is desirable to prepare a barley fraction having a greater concentration of these components. Such fraction could provide greater health benefits for less cost, due to its higher concentration of these key components. The present invention provides such a product, as well as a process for preparing such a product.

The art discloses various methods of processing barley and properties of unprocessed and processed barley.

U.S. Patent 5,063,078 claims a process consisting essentially of the steps of: (a) milling barley having a native soluble dietary fiber content to form a coarse barley flour having a particle size such that about 90% is less than 600 microns and greater than 50% larger than 200 microns; (b) size reducing without shearing the coarse barley flour in a single step to form a fine barley flour having a particle size such that 30% to 80% of the fine barley flour is less than about 50 microns; (c) classifying the fine barley flour employing a screen setting ranging from about 28 to about 65 microns into a first, minor barley flour fraction of a larger particle size having a concentrated soluble dietary fiber content at least 1.2 to 5X the native concentration and a second, major barley flour fraction of a smaller particle size having a reduced soluble dietary fiber content; and (d) separately recovering the first and second barley flour fractions.

The paper entitled "Beta-Glucan-Enriched Fractions from Laboratory-Scale Dry Milling and Sieving of Barley and Oats", by B. Knuckles, M. Chiu, and A. Betschart, Cereal Chem. 69(2):198-202 (1992), discloses dry milling and sieving of barley and oats produced fractions that were enriched in beta-glucan [(1-3), (1-4)-beta-D-glucan]. Hulled and hull-less barley and defatted rolled oats and oat bran, containing less than 10% moisture, were ground and sieved with a 325-mesh screen. Coarse material retained by the screen was reground and resieved. The resulting coarse fraction, with a weight yield of 18-30%, contained 16-27% total beta-glucan. Further sieving of this beta-glucan-rich fraction with a 100 mesh screen yielded fractions representing 1.7-16.5% of the kernel weight and containing up to 28% total beta-glucan. The water-soluble beta-glucan was about 55% of the total beta-glucan for all test materials except Wanubet barley, in which soluble beta-glucan ranged from 60-70% of the total beta-glucan. Dry milling and sieving techniques can be used to prepare barley and oat fractions with beta-glucan concentrations 2.4-4.9 times those of the original grains.

The journal articles entitled "Relationship Between Acid Extract Viscosity and Total Soluble and Insoluble Beta-Glucan Contents of Hulled and Hull-less Barley", R. Bhatty, Can. J. Plant Sci. 67:997-1008 (1987), and "The Major Biochemical Constituents of an Acid Extract of Barley Flour as Used in Viscosity Determinations by the Falling Ball Method", D. Smith, A Morgan, and A. Gill, J. Inst. Brew. 86:113-119 (1980), disclose the correlation between beta-glucan and acid extract viscosity. It is also believed that viscosity can be unstable, due to the activity of the endogenous enzyme beta-glucanase, unless the enzyme is inactivated.

The article entitled "Physiochemical and Functional (Breadmaking) Properties of Hull-less Barley Fractions", by R. Bhatty, Cereal Chem. 63(1):31-35, discloses that beta-D-glucans are primarily present (75%) in cell walls of barley endosperm, and cites Munck, 1981, as authority for this statement.

However, none of these publications teach or suggest a process of preparing a high soluble fiber barley fraction having increased concentrations of beta-glucan and total dietary fiber.

It is therefore the object of the present invention to provide a process of preparing a high soluble fiber barley fraction having increased levels of beta-glucan and total dietary fiber.

The present invention provides a process for preparing a high soluble fiber barley fraction having increased levels of beta-glucan and total dietary fiber, as compared to unprocessed barley, said process comprising:
(a) treating barley in a manner sufficient to deactivate substantially all the beta-glucanase contained in the barley;
(b) size reducing the barley to a coarse fraction and a fine fraction, wherein the beta-glucan content in said coarse fraction is greater than the beta-glucan content of the starting barley; and
(c) separating the coarse fraction from the fine fraction.

In the preferred process of the present invention, barley is treated to deactivate substantially all the beta-glucanase contained in the barley; size reduced into coarse and fine fractions; and the coarse fraction is then separated from the fine fraction. Preferably this is a dry process, e.g., the size reduction and separation of the barley fractions is carried out under dry conditions.

A wide variety of cultivars of barley are known. While all manner of barley varieties can be used herein, some varieties of barley are preferred. Generally, barley high in soluble dietary fiber and beta-glucan is preferred for the process of the present invention. The preference for a particular beta-glucan content is driven by the desired end-product and by economics. The beta-glucan content of barley will depend upon the particular variety of barley, and is typically in the range of from about 2.5% to about 16% by weight.

Examples of different barley varieties useful in the present invention include, but are not limited to, Wanubet, Nupana, Robust, Bowman, Morey, Excel, Shonakon, Prowashanupana, Washanupana, Thual, Scout, Franubet, Nubet, Klages, Tupper, Crystal, and mixtures thereof.

The barley used in the process of the present invention typically has an initial moisture content in the range of from about 6% to about 14% by weight.

The barley used in the present invention may be either "hull-less", or a hulled variety with the hull removed ("de-hulled"). The "hull" of the barley comprises the lemma and palea layers of the barley. As used herein, the term "hull-less" refers to barley varieties having a loose hull which is easily removed, and typically falls off prior to or during harvesting. Hulled barley has a tight fitting hull, which is not as easily removed, and is de-hulled by a de-hulling process. In either case, it is preferred that substantially all the barley hull is removed prior to being introduced to the process of the present invention, although conceptually the hulls could be removed at any point in the process (understanding that it would be difficult to remove the hulls after size reduction).

Any method of removing the hull known to those skilled in the art may be used in the process of the present invention, although the particular method employed will depend upon whether the barley variety is hull-less or hulled. Furthermore, while it is possible to remove the hulls of the barley by chemical as well as mechanical means, the chemical means typically involve wet processing, and therefore are not preferred in the process of the present invention.

Examples of de-hulling methods useful for removing the hull from hull-less varieties, where the hull does not happen to fall off during or prior to harvesting, include but are not limited to: waterjet spraying; chemical peeling; water washing; abrasion; and friction, wherein the barley kernels are tumbled together in a manner such that their hulls rub against each other, thus causing the hulls to fall off. Since the hulls are so easily removed for the hull-less varieties, the degree of de-hulling treatment will be considerably less than for the hulled barley varieties.

Examples of de-hulling methods useful for removing the hull from hulled varieties include, but are not limited to: waterjet spraying; chemical peeling; water washing; and abrasion. Of course, for the water washing, waterjet spray, and friction de-hulling methods, the degree of treatment required to remove the hulls from the hulled varieties will be greater than for the hull-less varieties, since the hull more tightly adheres to the barley in the hulled varieties.

A preferred de-hulling method for the hulled variety is dry mechanical de-hulling wherein the barley is abraded with rotating Carborundum stones. The parameters of this preferred de-hulling operation (e.g., stone grit, rotational speed of the stones, duration of contact between barley and rotating stones) will depend upon type of equipment utilized, and will be understood by one skilled in the art.

The de-hulled barley kernel is technically referred to as the caryopsis. The caryopsis comprises, roughly from exterior inwardly, the pericarp and seed coat (which collectively are loosely referred to as the bran), germ and endosperm.

In a preferred embodiment, all or part of the bran layer of the de-hulled or hull-less barley kernel is removed. The bran layer can be removed by any method known to those skilled in the art, including those identified for removing the hull of the barley, and is preferably removed by a "pearler" in a process known as "pearling". As defined on page 201 of the Dictionary of Milling Terms and Equipment, J. Wingfield, [(1989), available from the Association of Operative Millers, Leawood, Kansas, a pearler is "[a]n attrition or rubbing type mill used for removing the bran coat from cereal grains. In the pearler, grain is thrown or rubbed against an' abrasive surface, sometimes under pressure, forcing the kernels against each other and against the rough, slotted sides of the pearling chamber. The bran exits through the slots, assisted by the air movement introduced through the machine."

The degree of bran layer removal from the barley will vary to that level desired for a particular application. Thus, for example, a "10% pearling" step removes approximately 10% of the outermost portion of the barley kernel. Upon subsequent grinding to form a flour, the resultant flour is referred to as a "90% extraction" flour. For the process of the present invention, from about 1% to about 35% pearling is preferred, with from about 5% to about 25% pearling being more preferred.

The removal of the outermost portion of the de-hulled or hull-less barley kernel by pearling enhances total beta-glucan content in at least two ways. It removes layers that are: (1) lower in total beta-glucan content than the inner or endosperm part of the kernel; and (2) have a low differential in the ease of particle size reduction between beta-glucan and non-beta-glucan containing physical components.

The pearling may be carried out prior to, concurrent with, or after the beta-glucanase deactivation, although it is preferred to deactivate the beta-glucanase before pearling.

The hull-less or de-hulled barley is treated to deactivate substantially all the beta-glucanase contained therein. Preferably, the whole barley kernel (after any de-hulling and/or pearling) is treated prior to the size reduction. This prevents the beta-glucanase from reacting with any beta-glucan which is released from the barley cells during size reduction. However, the two steps may be carried out concurrently, although this not preferred since it increases the risk of beta-glucanase degrading all or part of the beta-glucan.

Any treatment method known to those skilled in the art for inactivating beta-glucanase may be used in the present invention. Examples of useful methods include, but are not limited to, steaming, autoclaving, heating and microwaving, with steaming being preferred. For heat, steam, autoclave and like treatment methods, the degree of treatment required to deactivate the beta-glucanase will depend on the time and temperature of the treatment. Additionally, the amount of available moisture will have an effect on the degree of treatment required. For example, deactivating by heating with little or no moisture available will take longer than heating with adequate moisture.

In the preferred steam treatment step, the barley is typically steamed until the barley temperature is maintained in the range of from about 71o C. to about 121o C., preferably from about 96o C. to about 107o C., more preferably from about 99o C. to about 104o C., for a period of time in the range of from about 4 minutes to about 40 minutes, preferably from about 6 minutes to about 20 minutes, more preferably from about 8 minutes to about 12 minutes.

The moisture content of the barley will be increased by the steaming operation. For typical barley (having an initial moisture content in the range of from about 6% to about 14%), the increase in moisture content will be greater when the initial moisture content is lower, e.g., 6%, and will be less when the initial moisture content is higher, e.g., 14%. In any event, sufficient steam is needed to inactivate the beta-glucanase enzyme contained in the barley. Following steaming, the moisture content of the barley is typically in the range of from about 10% to about 25%, preferably from about 12% to about 20%, more preferably from about 14% to about 17%, as measured when the barley exits the steaming operation.

The preferred steaming also acts to alter the physical characteristics of the barley. Steaming affects the endosperm components of the barley to increase the differential in ease of particle size reduction between the beta-glucan components and the non-beta-glucan containing starch components. Direct steaming plasticizes the barley grain by disrupting the protein matrix allowing easier physical breakdown of starch particles within this matrix. Direct steaming also toughens the cell walls, which contain beta-glucan, thus increasing their resistance to disintegration.

The barley kernel is size reduced into a coarse and fine fraction, preferably after being treated to deactivate the beta-glucanase. The beta-glucan content of the coarse fraction is greater than the beta-glucan content of the barley prior to processing, preferably at least about 1.1 times greater, more preferably at least about 1.2 times greater, still more preferably at least about 1.5 times greater. This is typically accomplished by size reducing the whole barley into particles having a degree of fineness wherein at least about 98%, preferably about 99%, more preferably 100% by weight passes through a U.S. 20 mesh; from 0% to about 63%, preferably from about 11% to about 52%, more preferably from about 21% to about 48% by weight of the ground particles remain on a U.S. 70 mesh testing screen; from about 11% to about 83%, preferably from about 24% to about 65%, more preferably from about 30% to about 58% by weight of the ground particles remain on a U.S. 200 mesh testing screen; and from about 18% to about 87%, preferably from about 30% to about 69%, more preferably from about 30% to about 64% by weight of the ground particles remain on a U.S. 400 mesh testing screen. Care must be taken to avoid making the particles too coarse or too fine, or else the desired increase in beta-glucan content cannot be achieved.

The barley may be size reduced to a coarse and fine fraction by any method known to those skilled in the art, preferably by those useful in a dry process. Process for size reducing typically utilize abrasion, shear, impact and compression force. Examples of equipment useful for the size reduction accomplished herein include, but are not limited to, hammermills, pinmills, roller mills, ball mills, attrition mills, kibblers, air jet mills, and granulators, with pinmills being preferred. As will be appreciated by those skilled in the art, pinmills comprise two flat counter-rotating disks. Each disk contains metal pins that protrude at 90 degree angles from the disk face. The pins on each disk intermesh. When the mill is turned on, one disk rotates in one direction while the other disk is: (a) stationary; (b) rotating in the opposite direction; or (c) rotating in the same direction at a different speed. Barley fed into the mills falls between the disks and is impacted by the metal pins. The specific action of a pinmill on barley is to reduce particle size without high shear.

After the barley is size reduced, the coarse and fine fractions are separated. This may be accomplished by any method known to those skilled in the art, preferably wherein the separation is carried out under dry conditions. Examples of useful methods include, but are not limited to, air classification and sifting.

Air classifiers are designed to operate on one or more of four separation principles, namely size, shape, density and behavior of particles in an air stream. Air classifiers operating on any one of these principles should be able to be used in the process of the present invention. However, most useful herein are those designed to operate on the basis of size differences. It is a particularly important advantage of the present invention that conventional apparatus can be employed since equipment design, fabrication and installation delays and expenses can be avoided. On a smaller scale, sieves with air suction can be used to practice the present separation step.

When used in the process of the present invention, the air classifier has settings which vary the particle size of the coarse and fine separation point. Preferably particle size separation points ranging from about 5 microns to about 840 microns, more preferably from about 30 to about 100 microns are utilized.

The rate of extraction of high soluble fiber-containing barley in the process of the present invention typically is in the range of from about 1% to about 90%, more typically from about 15% to about 65%, still more typically from about 25% to about 45% by weight. Generally, there is an inverse relationship between the extraction rate and the concentration of beta-glucan in the barley. Furthermore, to optimize the concentration and of beta-glucan in the barley, as well as the extraction rate of the barley, the particle size should not be too fine nor too coarse. If the particle size of the barley is too fine, then the concentration factor will be higher, but the extraction rate will be lower, and vice-versa for particles which are too coarse.

Prior to the size reduction of the barley into particles, the barley may optionally be flaked, typically to a flake thickness in the range of from about 0.33 millimeters to about 1.8 millimeters, preferably from about 0.75 millimeters to about 1.15 millimeters. The flaking may be accomplished by any means known to those skilled in the art, including by the method for flaking oats disclosed in "Oats: Chemistry and Technology", F. Webster, Ed., American Assn. of Cereal Chemists, Inc. (1986), the disclosure of which is incorporated herein by reference. Preferably the flaking rolls are non-corrugated.

Without being limited by theory, it is surprising and unexpected that the process of the present invention could provide a product having an increased beta-glucan concentration, preferably at least about 1.5 times the beta-glucan level of the starting hull-less or de-hulled barley.

A preferred process of the present invention comprises:
(a) pearling whole hull-less or de-hulled barley for a period of time sufficient to remove substantially all the bran layer and steaming the barley under conditions sufficient to maintain the barley temperature in the range of from about 99o C. to about 104o C. for a period in the range of from about 8 minutes to about 12 minutes;
(b) then grinding the barley to a degree of fineness such that 100% by weight passes through a U.S. 20 mesh, from about 21% to about 48% of the ground particles remain on a U.S. 70 mesh testing screen, from about 30% to about 58% by weight of the particles remain on a U.S. 200 mesh testing screen, and from about 30% to about 64% of the ground particles remain on a U.S. 400 mesh testing screen; and
(c) then separating the coarse fraction from the fine fraction by air classification.

The pearling and steaming operations may be carried out in any order, i.e., pearling followed by steaming or vice-versa, although it is preferred to have the steaming operation follow the pearling operation.

The present invention also includes a high soluble fiber barley fraction prepared by the process of the present invention.

The present invention is further illustrated, but not limited by, the following examples.

### EXAMPLES

### Example 1

Whole, de-hulled waxy starch barley is steamed at a temperature of 104o C for 10 minutes. After steaming the barley is flaked on a non-corrugated, double roller flaking machine to a thickness of 1.1 millimeter. Following faking, the barley is sent to a pinmill for grinding such that the granulation of the grind retained on a U.S. 70 mesh as sieved on an Alpine Air-jet sifter is 21.6% of the total weight and on a U.S. 200 mesh is 46.0% The ground barley is air classified with a coarse extraction of 35.1%, which yields a concentrate with a beta-glucan concentration of 1.8 times that of the starting material.

### Example 2

Whole, de-hulled waxy starch barley is steamed at a temperature of 104o C for 10 minutes. After steaming the barley is sent to a hammermill for grinding such that the granulation of the grind retained on a U.S. 70 mesh as sieved on an Alpine Air-jet sifter is 45.4% of the total weight and on a U.S. 200 mesh is 57.9% The ground barley is sifted with a coarse extraction of 64%, which yields a concentrate with a beta-glucan concentration of 1.5 times that of the starting material.

### Example 3

Whole, de-hulled normal starch barley is pearled to remove from 5% to 15% by weight of the barley kernel (without hull). The barley is then steamed at a temperature of 104o C for 10 minutes. After steaming the barley is flaked on a non-corrugated, double roller faking machine to a thickness of 1.1 millimeter. Following flaking, the barley is sent to a pinmill for grinding such that the granulation of the grind retained on a U.S. 70 mesh as sieved on an Alpine Air-jet sifter is 16.3% of the total weight and on a U.S. 200 mesh is 44.7% The ground barley is air classified with a coarse extraction of 40.7%, which yields a concentrate with a beta-glucan concentration of 1.8 times that of the starting material.

### Example 4

Whole, de-hulled normal starch barley is pearled to remove from 5% to 15% by weight of the barley kernel (without hull). The barley is then steamed at a temperature of 104o C for 10 minutes. After steaming the barley is sent to a hammermill for grinding such that the granulation of the grind retained on a U.S. 70 mesh as sieved on an Alpine Air-jet sifter is 34.2% of the total weight and on a U.S. 200 mesh is 49.8% The ground barley is sifted with a coarse extraction of 54%, which yields a concentrate with a beta-glucan concentration of 1.6 times that of the starting material.

## Claims

1. A process for preparing a high soluble fiber barley fraction having increased levels of beta-glucan and total dietary fiber, as compared to unprocessed barley, said process being characterized by:
(a) treating barley in a manner sufficient to deactivate substantially all the beta-glucanase contained in the barley;
(b) size reducing the barley to a coarse fraction and a fine fraction, wherein the beta-glucan content in said coarse fraction is greater than the beta-glucan content of the starting barley; and
(c) separating the coarse fraction from the fine fraction.

2. A process according to claim 1, characterized in that substantially all the barley hull is removed prior to treatment to deactivate substantially all the beta-glucanase contained in the barley.

3. A process according to claim 1 or 2, characterized in that the barley is pearled to remove from about 1% to about 35% by weight of the bran layer.

4. A process according to claim 3, characterized in that the barley is pearled to remove from about 5% to about 25% by weight of the bran layer.

5. A process according to claim 4, characterized in that the barley is pearled to remove substantially all of the bran layer.

6. A process according to claim 3, characterized in that the beta-glucanase in the barley is deactivated by steaming under conditions sufficient to maintain the barley temperature in the range of from about 71o C. to about 121o C. for a period of time in the range of from about 40 minutes to about 4 minutes, respectively.

7. A process according to claim 5, characterized in that the beta-glucanase in the barley is deactivated by steaming under conditions sufficient to maintain the barley temperature in the range of from about 99o C. to about 104o C. for a period of time in the range of from about 8 minutes to about 12 minutes, respectively.

8. A process according to claim 6, characterized in that the barley is sized reduced by grinding in a pinmill to a degree of fineness such that at least about 98% by weight passes through a U.S. 20 mesh, from 0% to about 63% of the ground particles remain on a U.S. 70 mesh testing screen, from about 11% to about 83% by weight of the particles remain on a U.S. 200 mesh testing screen, and from about 18% to about 87% of the ground particles remain on a U.S. 400 mesh testing screen.

9. A process according to claim 7, characterized in that the barley is sized reduced by grinding in a pinmill to a degree of fineness such that 100% by weight passes through a U.S. 20 mesh, from about 21% to about 48% of the ground particles remain on a U.S. 70 mesh testing screen, from about 30% to about 58% by weight of the particles remain on a U.S. 200 mesh testing screen, and from about 30% to about 64% of the ground particles remain on a U.S. 400 mesh testing screen.

10. A process according to claim 8, characterized in that the barley is steamed prior to grinding in the pinmill.

11. A process according to claim 9 or 10, characterized in that the coarse fraction is separated from the fine fraction by air classification.

12. A process according to claim 11, characterized in that the air classifier has particle size separation points ranging from about 5 microns to about 840 microns.

13. A process according to claim 12, characterized in that the coarse fraction is separated from the fine fraction by an air classifier having particle size separation points ranging from about 30 microns to about 100 microns.

14. A process according to claim 12, characterized in that the rate of extraction of high soluble fiber-containing barley is in the range of from about 1% to about 90% by weight.

15. A process according to claim 13, characterized in that the rate of extraction of high soluble fiber-containing barley is in the range of from about 25% to about 45% by weight.

16. A process according to claim 11, characterized in that the barley has an initial moisture content in the range of from about 6% to about 14% by weight, and the initial beta-glucan content of the barley is in the range of from about 2.5% to about 16% by weight.

17. A process according to claim 16, characterized in that the barley is a hulled variety and is de-hulled by abrading the barley with rotating Carborundum stones.
